# EUROPEAN PATENT APPLICATION

(11) **EP 1 033 861 A2**
(43) Date of publication of application: **06.09.2000**
(21) Application number: 00301392.7
(22) Date of filing: 22.02.2000
(51) Int. Cl.: H04M 3/533

(54) **Voice mail on packet networks**

(30) Priority: 01.03.1999 US 260227
(71) Applicant: LUCENT TECHNOLOGIES INC., Murray Hill, New Jersey 07974-0636 (US)
(72) Inventor: Fox, James H., Allentown, Pennsylvania 18104 (US)
(74) Representative: Buckley, Christopher Simon Thirsk

(57) **Abstract**

Rather than relying solely on a public-switched network (PSN) in order to leave a voice-mail message when a callee is not available take a call from a caller, communications are transferred to a packet-switched network, such as the Internet, and the voice-mail message from the caller to the callee is transmitted over the packet-switched network. For long-distance and other time-based toll calling, cost savings are provided as compared to conventional PSN-based voice-mail schemes in which the entire time that it takes to leave a voice-mail message is charged to either the caller or the callee on an incremental cost basis.

## Description

### Field Of The Invention

The present invention relates to telecommunications, and, in particular, to voice messaging systems.

### Description Of The Related Art

Locally switched (e.g., private branch exchange (PBX)) and publicly switched (e.g., PSN) telephone systems often provide voice-mail messaging capabilities, in which a caller can leave a voice message for subsequent playback by a callee who is not currently available to answer the phone. When the callee is already on the phone or away from the phone, the incoming call is connected to a voice-mail system that transmits a greeting message to the caller prompting him or her to leave a voice message. In addition to recording the voice message, some voice-mail systems allow the caller to review the message and, if appropriate, re-record it. All of these activities contribute to the total duration of the completed call. In the case of long-distance and other time-based toll calling, the time that it takes to leave such a voice message is charged (e.g., at long-distance rates) to either the caller, or, in the case of 800-number-type calling, to the callee, even though no real-time two-way conversation actually occurs.

### Summary Of The Invention

The present invention is directed to a technique for reducing the costs of telecommunications related to leaving voice messages during long-distance or other time-based toll calling. According to the present invention, when a voice message is to be left by a caller for an unavailable callee, communications are automatically switched from a higher-cost network (e.g., the standard public-switched network (PSN), which is usually considered to be a circuit-switched network) to a lower-cost network (e.g., a packet-switched network, such as the Internet), after which the caller transmits the message over the lower-cost packet-switched network for subsequent playback by the callee. In this way, the duration of the time-based toll call over the higher-cost public-switched network will be reduced, thereby reducing the overall cost of the communications.

### Brief Description Of The Drawings

Other aspects, features, and advantages of the present invention will become more fully apparent from the following detailed description, the appended claims, and the accompanying drawings in which:
Fig. 1 shows a block diagram of a communications network, according to one embodiment of the present invention; and
Fig. 2 shows a flow diagram of the processing implemented by the communications network of Fig. 1 for a particular communication session, according to one embodiment of the present invention.

### Detailed Description

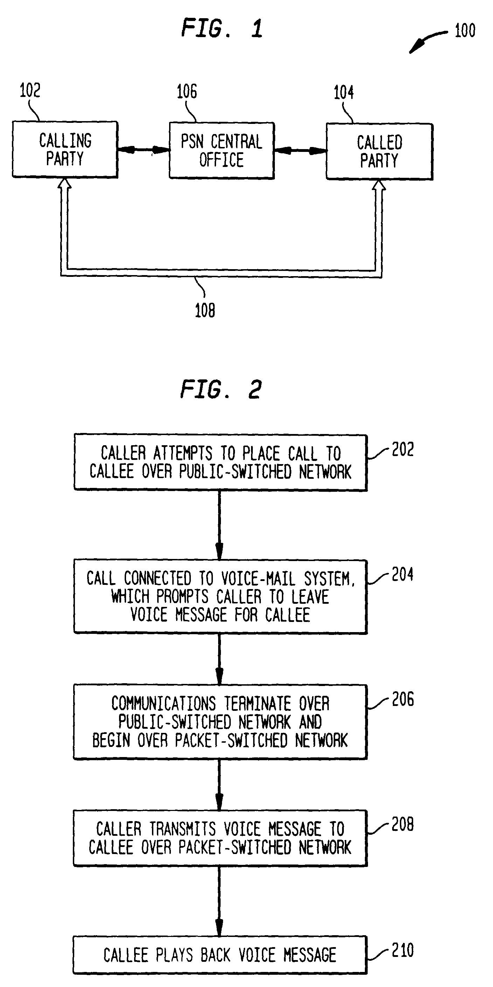

Fig. 1 shows a block diagram of a communications network **100**, according to one embodiment of the present invention. Communications network **100** comprises caller communications equipment **102** (i.e., the calling party) and callee communications equipment **104** (i.e., the called party), where those two sets of equipment can communicate with one another over either a public-switched network (e.g., through at least one central office **106**) or a packet-switched network, such as the Internet, via communication links **108**. It will be appreciated that, in the case of a long-distance call, two central offices will be involved, each connected to the corresponding party, with a long-distance trunk connecting the central offices to each other. As is understood by workers in the art, the PSN may itself contain packet-switched portions, most typically in the long-distance transmission portion, while reverting to a circuit-switched portion near the subscriber.

According to the present invention, when the callee is not available to participate in a real-time conversation with the caller over the PSN, communications between caller equipment **102** and callee equipment **104** over the PSN automatically terminate and are automatically replaced by communications between equipment **102** and **104** over the packet network. In this way, the caller can transmit a voice message over the packet network for storage on callee equipment **104** without having to extend the duration of the call over the PSN, thereby potentially reducing the cost of communications to the caller, since there is little or no incremental cost of using a packet-switched network such as the Internet. The incremental cost refers to the cost of one additional communication time period over the network. The incremental cost may, for example, be the cost of placing calls from the caller and from the callee to their respective local Internet service providers. In most cases, flat-rate local calling and flat-rate Internet access charges provide for a zero incremental cost, although of course any access charges affect the total cost savings obtained. Note that, in the case of "toll-free" 800-number-type calling where the callee is paying the cost of the long-distance call, the callee will reap the benefits of the cost savings provided by the present invention.

Fig. 2 shows a flow diagram of the processing implemented by communications network **100** of Fig. 1 for a particular communication session, according to one embodiment of the present invention. Using caller equipment **102**, the caller places a call to the callee over the public-switched network (step **202** of Fig. 2). When the callee is not available to answer the call, the call is automatically connected to a voice-mail system implemented within callee equipment **104**, which transmits a greeting message (often referred to as an "outgoing message") pre-recorded by the callee to prompt the caller to leave a voice message (step **204**). At that point, the connected PSN call from the caller to callee equipment **104** is automatically terminated and communications over the packet-switched network are automatically initiated (step **206**). The transition from the PSN to the packet-switched network in step **206** may be both automatic and transparent to the caller by the use of an appropriate handshaking protocol, typically initiated over the PSN, although a portion may be transmitted over the packet-switched network as appropriate. The caller then transmits a voice message to callee equipment **104** over the packet-switched network (step **208**). This message is received by the callee equipment and stored in a memory, which may be, for example, a semiconductor memory, magnetic memory (e.g., disk or tape), ferroelectric memory, or optical memory, among other types. The callee can then subsequently play back the voice message in a manner similar to a conventional voice-mail system (step **210**).

A packet-switched network, especially in the case of the Internet, may introduce variable delays in transmitting audio data packets. For example, network congestion and different routing paths may cause the packets to arrive at the callee equipment after differing propagation delays, and even in out-of-order sequences in the case of the TCP/IP standard. This could cause excessive delays in the case of a real-time two-way telephone conversation, making the Internet not suitable for this purpose in many cases. However, in the present technique, the callee equipment may reassemble the packets in the proper sequence and thereby recreate the voice message for subsequent playback by the callee without the delays that occurred during transmission. Hence, useful advantage is taken of the fact that the callee is not available to answer the phone when the call is placed.

A number of different equipment configurations are possible in practicing the invention For example, the configuration in Fig. 1 shows communications links **108** of the packet-switched network being connected to both the calling party and called party locations. This is expected to be increasingly, the case in future data networks in the corporate world. In fact. PBX (private branch exchange) terminals may provide connectivity to both the PSN and the Internet or other form of packet-switched network. It is often the case that a PBX system also provides the voice-mail function, in which case the present technique may be implemented as a software change to existing equipment. In other cases, especially when a home subscriber is involved, the connection to the Internet may be provided by the central office itself, or by an Internet Service Provider (ISP) connected thereto. Hence, the packet-switched network reverts to a circuit-switched network before reaching the subscriber premises in that case. However, the savings in reduced long-distance fees may still be obtained. Still other configurations with cable modem, wireless, or ADSL connections to the Internet are possible. In fact, a given conductor or other transmission path may provide connectivity to both the PSN and packet-switched networks, which will likely be increasingly common in the future.

A number of different implementations are possible for the present invention. In one set of implementations, the intelligence for the operations described in the context of Figs. 1 and 2 is distributed between caller equipment **102** and callee equipment **104**. In such implementations, a prearranged protocol may be defined to enable each set of equipment to recognize that the other set supports the appropriate functionality and then to execute that functionality. This may involve the transmission of information over the PSN in parallel with (and possibly encoded within) the transmitted audio signals. Callee equipment **104** may be a system that integrates phone and e-mail functions such that an audio voice-mail message received via e-mail over the packet-switched network is forwarded to the callee's phone system and played back in the manner of a conventional voice-mail message.

In another set of implementations, the intelligence is resident only in caller equipment **102**. In such implementations, the caller equipment has information (e.g., the callee's IP address or e-mail address) needed to transmit a message to callee equipment **104** over the packet-switched network. In such implementations, the callee equipment need not be an integrated system that automatically forwards voice-mail messages to the callee's phone system. In that case, the voice-mail message may be retrieved using the callee's computer in the manner of a conventional e-mail message. The message may be an attached audio file or it may be a text file that is automatically created by voice recognition software implemented within caller equipment **102** when the caller leaves his or her voice message.

In still another set of implementations, the intelligence is largely resident in the callee equipment. The callee equipment **104** may comprise a PBX, an answering machine, or both. In particular, the use of a personal computer (PC) to perform answering machine functions, and which is connected to both the PSN and the Internet, is increasingly common, and may readily be used in practicing the present invention. The callee equipment **104** may even be considered to include central office equipment, as when a "Centrex" type of service is employed for answering machine functionality. It can be seen that these equipment types can readily provide signaling intelligence and message storage capability for implementing the invention.

In the embodiment shown in Fig. 2, a relatively brief call to the callee's voice-mail system is connected over the public-switched network. In alternative embodiments, no such connection is ever made over the PSN. For example, after a specified number of rings, caller equipment **102** automatically terminates the call over the PSN without there ever being a connection to callee equipment **104**. Caller equipment **102** then prompts the caller to leave a voice message for the callee, where caller equipment **102** is programmed to identify the callee's Internet Protocol (IP) or e-mail address from the phone number dialed by the caller. Alternatively, the callee equipment may transmit a signal to the caller equipment over the packet-switched network indicating that the callee is not available, and that a message may be transmitted over the packet-switched network to the callee. The callee equipment may determine the caller identity by the "caller ID" technique, for example. The caller equipment may actually generate the voice prompt for the caller to leave the voice message from a locally stored audio file, if desired. In the case of a pre-arranged handshaking protocol, the switchover to the packet-switched network is transparent to the caller. The caller then transmits his or her message, which is transmitted to callee equipment **104** over the packet-switched network as either an audio file or a text file. In this case, cost savings are even greater since no call is ever connected over the PSN.

While the inventive technique has been described in terms of public-switched networks (PSNs) and packet-switched networks, these may become increasingly merged in the future. That is, a higher grade of service, corresponding to the PSN, may be made available at higher cost by means of guaranteed packet delivery times, typically over a premium-grade version of the Internet. A lower grade of service may remain as a "best effort" packet delivery service, as is presently the case with the Internet. However, the teachings of the present invention still apply, with the switch between the higher-cost service (by whatever name) and the lower-cost service (e.g., Internet) being made on the basis of the availability of the called party.

It will be further understood that various changes in the details, materials, and arrangements of the parts which have been described and illustrated in order to explain the nature of this invention may be made by those skilled in the art without departing from the scope of the invention as expressed in the following claims.

## Claims

1. method for transmitting a message from a caller to a callee, comprising the steps of:
(a) placing a call from the caller to the callee over a first network using caller communications equipment;
(b) automatically terminating communications over the first network and automatically initiating communications over a second network from the caller to callee communications equipment, wherein the incremental cost of communicating over the second network is less than the incremental cost of communicating over the first network; and
(c) transmitting a caller message from the caller communications equipment to the callee communications equipment over the second network for playback at a later time.

2. The invention of claim 1, further comprising the step of converting the caller message from audio into text prior to transmitting the caller message over the second network.

3. The invention of claim 1, wherein step (a) comprises the steps of connecting the call to the callee communications equipment and transmitting a stored outgoing message from the callee communications equipment over the first network.

4. A method for receiving a message from a caller, comprising the steps of:
(a) receiving an indication of a call attempt from the caller over a first network using callee communications equipment;
(b) indicating to the caller that the callee is not available by automatic transmission from the callee communications equipment to said caller;
(c) automatically terminating communications over the first network and automatically initiating communications over a second network, wherein the incremental cost of communicating over the second network is less than the incremental cost of communicating over the first network;
(d) receiving the message from the caller over the second network, and
(e) storing the message for playback at a later time.

5. The invention of claim 4, wherein said indicating is accomplished by transmitting a stored audio message from said callee communications equipment to said caller over said first network prior to said terminating.

6. The invention of claim 4, wherein said indicating is accomplished by transmitting a signal from said callee communications equipment to said caller communications equipment over said second network, whereby answering the call over said first network is avoided.

7. The invention of claim 1 or 4 wherein the first network comprises a circuit-switched network portion and the second network is a packet-switched network.

8. The invention of claim 1 or 4 wherein the first network is a guaranteed quality of service packet-switched network and the second network is a best-effort packet-switched network.

9. The invention of claim 4, wherein the message from the caller is an audio message.

10. The invention of claim 4, wherein the message from the caller is a text message.

11. Communications equipment for transmitting a message from a caller to a callee, wherein the communications equipment is adapted to:
(a) place a call from the caller to the callee over a first network;
(b) automatically terminate communications over the first network and automatically initiate communications over a second network from the caller to callee communications equipment; and
(c) transmit the message to the callee communications equipment over the second network.

12. The invention of claim 11, wherein the first network is a public-switched network and the second network is a packet-switched network.

13. The invention of claim 11, wherein the first network is a first packet-switched network and the second network is a second packet-switched network.

14. The invention of claim 1 or 11 wherein the message is a voice-mail message.

15. The invention of claim 11, wherein the message is a text message and step (c) comprises the step of converting audio data into the text message prior to transmitting the text message over the second network.

16. The invention of claim 1 or 11 wherein the communications over the first network are automatically terminated and the communications over the second network are automatically initiated without specific interaction from the caller.

17. The invention of claim 11, wherein step (a) comprises the steps of connecting the call to the callee communications equipment and transmitting a greeting message from the callee communications equipment over the first network.

18. The invention of claim 1 or 11 wherein step (b) comprises the step of terminating communications over the first network without connecting the call to the callee communications equipment.
